# EUROPÄISCHE PATENTSCHRIFT

(11) **EP 1 213 547 B1**
(45) Veröffentlichungstag und Bekanntmachung des Hinweises auf die Patenterteilung: **28.12.2005**
(21) Anmeldenummer: 01125229.3
(22) Anmeldetag: 24.10.2001
(51) Int. Cl.: F24H 9/02

(54) **Motorunabhängiges Heizgerät eines Kraftfahrzeuges**
Independent engine heater of a motor car
Radiateur indépendant pour moteur de voiture

(30) Priorität: 07.12.2000 DE 10060705
(43) Veröffentlichungstag der Anmeldung: 12.06.2002
(73) Patentinhaber: J. Eberspächer GmbH & Co. KG, 73730 Esslingen (DE)
(72) Erfinder: Humburg, Michael, 73035 Göppingen (DE)

(56) Entgegenhaltungen:
- DE-A- 19 849 103
- US-A- 3 779 229
- US-A- 5 855 319

## Beschreibung

Die Erfindung betrifft ein motorunabhängig betreibbares Heizgerät eines Kraftfahrzeuges, insbesondere in Form eines Zuheizers oder einer Standheizung, mit den Merkmalen des Anspruchs 1.

Ein derartiges Heizgerät ist beispielsweise aus der WO 00/24600 bekannt und besitzt ein Gehäuse, in dem ein Brenner sowie ein den Brenner koaxial umhüllender Wärmeübertrager untergebracht sind. Das Gehäuse ist außerdem mit Anschlußstutzen für den Wasser- bzw. Luft-Vorlauf und für den Wasser- bzw. Luft-Rücklauf ausgestattet. Um eine einfache, individuelle, wenig Bauraum benötigende Leitungsführung beim Einbau des Heizgerätes in ein Kraftfahrzeug zu ermöglichen, ist wenigstens einer der Anschlußstutzen als verdrehbarer Winkelstutzen ausgebildet. Dennoch kann es auch hier zu Einbausituationen kommen, bei denen die Montage sowie die Leitungsführung relativ aufwendig sind.

Weitere Heizgeräte sind aus den Dokumenten US-A-5855319 und US-A-3779229 bekannt.

US-A-5855319 offenbart ein Heizgerät, das in 3 Geräteeinheite unterteilt ist, die in 3 zugeordneten Gehäuseteilen untergebracht sind.

US-A-3779229 offenbart ein Heizgerät mit 2 Gehäuseteilen, die über Schwenkbefestigungselemente verfügen, um den Zugang zum Innenbereich des Heizgerätes zu vereinfachen.

Die vorliegende Erfindung beschäftigt sich mit dem Problem, für ein Heizgerät der eingangs genannten Art eine Ausführungsform anzugeben, die bei unterschiedlichen Bauraumsituationen relativ leicht montierbar ist und eine relativ einfache Leitungsführung ermöglicht.

Dieses Problem wird erfindungsgemäß durch ein Heizgerät mit den Merkmalen des Anspruchs 1 gelöst.

Die Erfindung beruht auf dem allgemeinen Gedanken, das Heizgerät in zwei Geräteeinheiten zu unterteilen, die in zugeordneten Gehäuseteilen untergebracht sind, wobei diese Gehäuseteile in unterschiedlichen Relativlagen zueinander zusammengebaut werden können, um für das so wieder zusammengefügte Heizgerät ein gemeinsames Gehäuse auszubilden. Zu diesem Zweck sind Anschlußmittel vorgesehen, mit denen die Gehäuseteile zumindest in zwei verschiedenen, zueinander um eine Drehachse verdrehte Relativpositionen aneinander befestigbar sind. Des weiteren ist der Brenner an dem einen Gehäuseteil befestigt und koaxial zur Drehachse angeordnet, während der Wärmeübertrager am anderen Gehäuseteil befestigt und koaxial zur Drehachse angeordnet ist. Da Brenner und Wärmeübertrager in der Regel rotationssymmetrisch ausgebildet sind, kann die funktionale Einheit aus Brenner und Wärmeübertrager in jeder beliebigen gedrehten Relativstellung zwischen Brenner und Wärmeübertrager gewährleistet werden.

Durch die erfindungsgemäße Maßnahme können Anschlüsse bzw. Anschlußgruppen, die an dem einen und/oder an dem anderen Gehäuseteil angeordnet sind, durch die Einstellung einer geeigneten Relativposition zwischen den beiden Gehäuseteilen in Abhängigkeit der jeweils vorliegenden Einbauverhältnisse auf vielfältige Weise positioniert werden. Hierdurch kann das erfindungsgemäße Heizgerät individuell an die jeweils herrschende Einbausituation angepaßt werden, wodurch sich die Montage sowie die Leitungsführung vom und zum Heizgerät verbessert.

Durch die Unterteilung des Heizgerätes in zwei Geräteeinheiten, ergibt sich die Möglichkeit, diese Geräteeinheiten modulartig auszubilden, so daß jeweils mehrere zusammengehörige Komponenten in einem der Gehäuseteile zusammengefaßt sind. Insbesondere kann das erste Gehäuseteil Anschlußstutzen für Brennstoff und/oder Frischgas und/oder Abgas aufweisen. Durch eine entsprechende Drehverstellung des ersten Gehäuseteils können somit für diese Anschlußstutzen verschiedene Positionen eingestellt werden.

Im ersten Gehäuseteil sind neben dem Brenner vorzugsweise ein Steuergerät und/oder eine Brennstoffdosiereinrichtung und/oder ein zur Zuführung von Frischgas und/oder zur Abführung von Abgas dienendes Gebläse untergebracht. Hierdurch wird im ersten Gehäuseteil eine Geräteeinheit ausgebildet, deren Komponenten funktionell mit dem Brenner zusammenwirken.

Im Unterschied dazu kann das zweite Gehäuseteil Anschlußstutzen für einen Vorlauf und für einen Rücklauf eines Wärmeübertragungsmediums aufweisen, mit dem der Wärmeübertrager beaufschlagt ist. Durch eine entsprechende Verdrehung des zweiten Gehäuseteils können somit diese Anschlußstutzen in unterschiedlicher Weise positioniert werden.

Zweckmäßig kann am oder im zweiten Gehäuseteil neben dem Wärmeübertrager eine Pumpeinrichtung für das Wärmeübertragungsmedium angeordnet sein. Auch hierdurch wird ein modularer Aufbau für diese Geräteeinheit erreicht, da die funktionell mit dem Wärmeübertrager zusammenwirkende Pumpeinrichtung im oder am gleichen Gehäuseteil angeordnet ist.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: einen Längsschnitt durch eine Prinzipdarstellung eines erfindungsgemäßen Heizgerätes,
- Fig. 2: eine perspektivische Ansicht auf das Heizgerät nach der Erfindung bei einer ersten Zusammenbaukonfiguration,
- Fig. 3: eine perspektivische Ansicht wie in Fig. 2, jedoch bei einer zweiten Zusammenbaukonfiguration, und
- Fig. 4: einen Querschnitt durch ein Gehäuseteil des erfindungsgemäßen Heizgerätes.

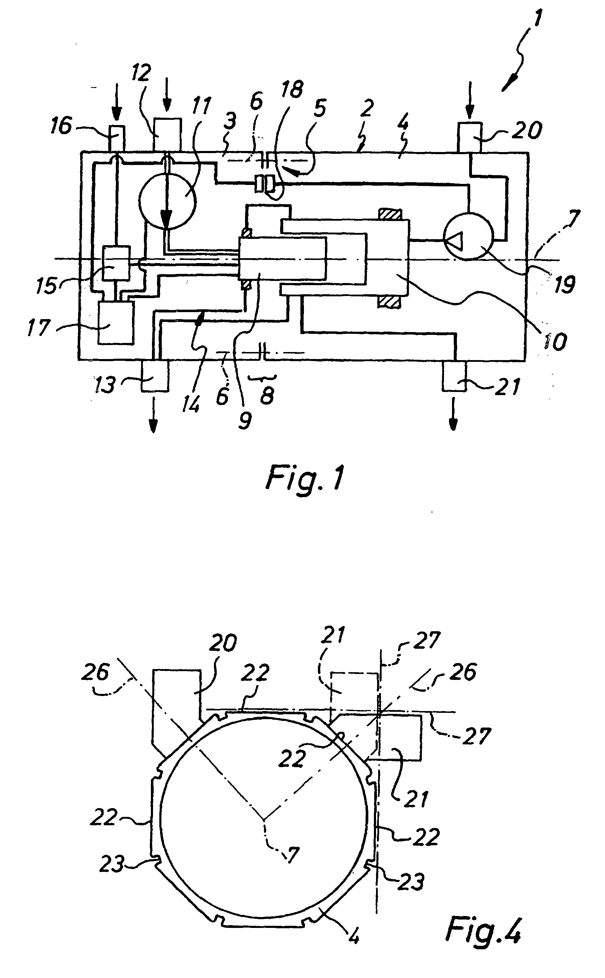

Entsprechend Fig. 1 weist ein erfindungsgemäßes Heizgerät 1 ein zweiteiliges Gehäuse 2 auf, das aus einem ersten Gehäuseteil 3 und aus einem zweiten Gehäuseteil 4 zusammengebaut ist. Zu diesem Zweck sind Anschlußmittel 5 vorgesehen, die hier bei jedem Gehäuseteil 3,4 in Form eines innenliegenden, umlaufenden Flansches ausgebildet sind. Verschraubungen 6, die durch strichpunktierte Linien angedeutet sind, können beispielsweise durch einen hier nicht dargestellten Deckel des Gehäuses 2 durchgeführt werden. Die Anschlußmittel 5 sind so gestaltet, daß die beiden Gehäuseteile 3 und 4 wenigstens in zwei verschiedenen Relativpositionen aneinander befestigbar sind, wobei sich diese Relativpositionen durch eine Verdrehung der beiden Gehäuseteile 3,4 relativ zueinander um eine Drehachse 7 ergeben. Vorzugsweise sind die aneinander anzuschließenden Seiten der Gehäuseteile 3,4 so ausgestaltet, daß sich bei zusammengebautem Gehäuse 2 eine geschlossene Außenkontur ergibt. Das bedeutet insbesondere, daß die Querschnitte der beiden Gehäuseteile 3,4 zumindest in einem Bereich 8, in dem die Anschlußmittel 5 angeordnet sind, in allen vorgesehenen Relativpositionen im wesentlichen deckungsgleich aufeinanderliegen.

Das erste Gehäuseteil 3 enthält einen Brenner 9, der am ersten Gehäuseteil 3 befestigt und koaxial zur Drehachse 7 angeordnet ist. Der Brenner 9 steht in axialer Richtung von dem ersten Gehäuseteil 3 ab und ragt bei zusammengebautem Gehäuse 2 in einen Wärmetauscher oder Wärmeübertrager 10 ein, der im zweiten Gehäuseteil 4 untergebracht ist. Der Wärmeübertrager 10 ist am zweiten Gehäuseteil 4 befestigt und ebenfalls koaxial zur Drehachse 7 ausgerichtet. Durch die gewählte koaxiale Positionierung von Brenner 9 und Wärmeübertrager 10 kann auch bei verschiedenen Relativpositionen zwischen den beiden Gehäuseteilen 3 und 4 die gewünschte funktionale Kopplung zwischen Brenner 9 und Wärmeübertrager 10 gewährleistet werden.

Das erste Gehäuseteil 3 enthält bei der hier dargestellten besonderen Ausführungsform außerdem ein Gebläse 11, das dem Brenner 9 Frischgas zuführt und dadurch gleichzeitig vom Brenner 9 erzeugtes Abgas aus dem Brenner 9 abführt. Für die Zufuhr von Frischgas besitzt das erste Gehäuseteil 3 einen Frischgas-Anschlußstutzen 12; für die Abfuhr von Abgas ist ein entsprechender Abgas-Anschlußstutzen 13 vorgesehen. Die Kopplung zwischen Brenner 9 und Wärmeübertrager 10 erfolgt bei zusammengebautem Gehäuse 2 so, daß die vom Brenner 9 erzeugten heißen Abgase in üblicher Weise den Wärmeübertrager 10 beaufschlagen können, wobei die abgekühlten Abgase von einem Abgasstrang 14 erfaßt werden, der im ersten Gehäuseteil 3 untergebracht ist. Die entsprechenden Anschlüsse und Verbindungen sind vorzugsweise so ausgebildet, daß sie in jeder der einstellbaren Relativpositionen zwischen den Gehäuseteilen 3 und 4 hinreichend gasdicht sind.

Das erste Gehäuseteil 3 enthält außerdem eine Brennstoffdosiereinrichtung 15, die über einen Brennstoff-Anschlußstutzen 16 an eine Brennstoffversorgung eines Kraftfahrzeugs angeschlossen ist, in welches das Heizgerät 1 eingebaut ist. Die Brennstoffdosiereinrichtung 15 versorgt den Brenner 9 mit der erforderlichen Brennstoffmenge. Im ersten Gehäuseteil 3 ist zweckmäßigerweise auch ein Steuergerät 17 untergebracht, das über entsprechende Leitungen den Brenner 9 bzw. einen nicht dargestellten Glühstift, die Brennstoffdosiereinrichtung 15 und das Gebläse 11 betätigt. Des weiteren ist bei der hier gezeigten Ausführungsform vorgesehen, daß das Steuergerät 17 über eine entsprechende Schnittstelle 18 außerdem eine Pumpe 19 betätigt, die im zweiten Gehäuseteil 4 untergebracht ist und zur Beaufschlagung des Wärmeübertragers 10 mit einem Wärmeübertragungsmedium dient. Diese Pumpe 19 ist saugseitig mit einem Rücklauf-Anschlußstutzen 20 und druckseitig mit einem Eingang des Wärmeübertragers 10 verbunden. Ein Ausgang des Wärmeübertragers 10 ist mit einem Vorlauf-Anschlußstutzen 21 verbunden. Über die am zweiten Gehäuseteil 4 angeordneten Rücklauf-Anschlußstutzen 20 und Vorlauf-Anschlußstutzen 21 ist der Wärmeübertrager 10 in einen Fluidkreis des Fahrzeuges eingebunden, derart, daß das Heizgerät 1 motorunabhängig betreibbar ist und als Zuheizer oder als Standheizung dient. Bei einer reinen Zuheizung kann die Pumpe 19 auch entfallen. Die Pumpe 19 kann auch modular an der Außenseite des Gehäuses 2 montiert sein.

Beim Wärmeübertragungsmedium, das vom Wärmeübertrager 10 erwärmt wird, handelt es sich hier um das Kühlmittel eines Motorkühlkreises, so daß das Heizgerät 1 ein Wasserheizgerät bildet. Der mit dem Kühlmittel oder "Kühlwasser" beaufschlagte Wärmeübertrager 10 umhüllt den Brenner 9 und bildet dadurch einen sogenannten "Wassermantel".

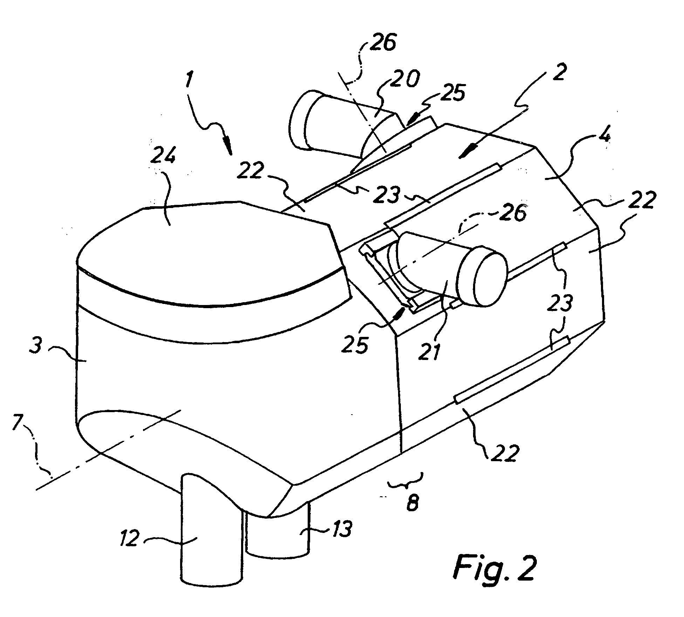

Entsprechend den Fig. 2 bis 4 besitzen die Gehäuseteile 3,4 zumindest im Bereich 8 der aneinander anschließenden Seiten einen regelmäßigen achteckigen Außenquerschnitt. Während beim ersten Gehäuseteil 3 hier der achteckige Außenquerschnitt nur im Bereich der Anschlußmittel 5 ausgebildet ist, besitzt das zweite Gehäuseteil 4 entlang seiner gesamten axialen Erstreckung den achteckigen Außenquerschnitt. Dementsprechend weist die Außenkontur des zweiten Gehäuseteils 4 acht ebene Außenflächen 22 auf, wobei benachbarte Außenflächen 22 jeweils um 45° zueinander geneigt verlaufen. Zwischen zwei benachbarten Außenflächen 22 sind quasi in den Kanten des Außenquerschnitts Rillen 23 ausgebildet, die hier keinen Hinterschnitt aufweisen. Ebenso sind Ausführungsformen möglich, bei denen die Rillen 23 einen Hinterschnitt besitzen. Die Rillen 23 dienen als Angriffsstellen für Befestigungsmittel, mit denen das Heizgerät 1 am Fahrzeug befestigbar ist.

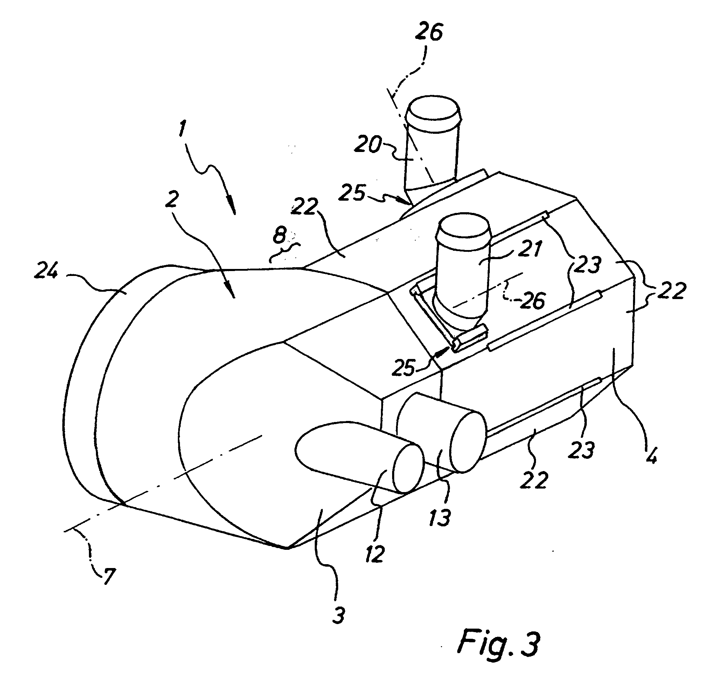

Entsprechend den Fig. 2 und 3 besitzt das erste Gehäuseteil 3 an einer Seite, in Fig. 2 oben, einen Deckel 24. An einer dem Deckel 24 gegenüberliegenden Seite, in Fig. 2 unten, weist das erste Gehäuseteil 3 den Frischgas-Anschlußstutzen 12 und den Abgas-Anschlußstutzen 13 auf. Der zugehörige Brennstoff-Anschlußstutzen 16 ist hier nicht sichtbar. Das zweite Gehäuseteil 2 weist an zwei verschiedenen Außenflächen 22 zum einen den Rücklauf-Anschlußstutzen 20 und zum anderen den Vorlauf-Anschlußstutzen 21 auf. Die Anschlußstutzen 20,21 des zweiten Gehäuseteils 4 sind hier jeweils mittels einer Halteeinrichtung 25 am zweiten Gehäuseteil 2 fixiert, die eine Verstellung der Anschlußstutzen 20,21 ermöglicht. In den Fig. 2 und 3 ist dabei eine Ausführungsform dargestellt, bei der die Anschlußstutzen 20,21 in 90°-Schritten jeweils bezüglich einer zugehörigen Schwenkachse 26 umsteckbar sind. Diese Schwenkachse 26 steht dabei senkrecht auf der Drehachse 7. Des weiteren sind der Rücklauf-Anschlußstutzen 20 und der Vorlauf-Anschlußstutzen 21 abgewinkelt, hier um etwa 45°.

Bei der Konstellation gemäß Fig. 2 ist zwischen den Gehäuseteilen 3 und 4 eine erste Relativposition eingestellt, bei welcher der Deckel 24 oben und die Anschlußstutzen 12 und 13 des ersten Gehäuseteils 3 unten angeordnet sind. Die Anschlußstutzen 20,21 des zweiten Gehäuseteils 4 sind in Fig. 2 so orientiert, daß die parallel zueinander und senkrecht zur Drehachse 7 verlaufen. Dabei ist der Rücklauf-Anschlußstutzen 20 nach hinten gerichtet, während der Vorlauf-Anschlußstutzen 21 nach vorn gerichtet ist. Im Unterschied dazu zeigt die Konstellation gemäß Fig. 3 eine zweite Relativposition zwischen den beiden Gehäuseteilen 3 und 4, bei der die beiden Gehäuseteile 3 und 4 um die Drehachse 7 um 90° gegeneinander verdreht sind. Dementsprechend ist hier der Deckel 24 hinten angeordnet, während sich die Anschlußstutzen 12 und 13 des ersten Gehäuseteils 3 vorn befinden. In Fig. 3 sind zusätzlich die Anschlußstutzen 20 und 21 des zweiten Gehäuseteils 4 umgesteckt, derart, daß beide nach oben weisen bzw. nach oben abstehen. Dabei erstrecken sich die beiden Anschlußstutzen 20,21 wieder senkrecht zur Drehachse 7 und parallel zueinander. Die Anschlußstutzen 20 und 21 sind in Fig. 3 gegenüber Fig. 2 demnach um 180° umgesteckt.

Neben den in den Fig. 2 und 3 gezeigten Konfigurationen für den Zusammenbau des Heizgerätes 1 sind noch weitere Konfiguationen mit anderen Relativpositionen zwischen den beiden Gehäuseteilen 3 und 4 möglich. Dementsprechend kann das erfindungsgemäße Heizgerät 1 an viele verschiedene Einbausituationen individuell angepaßt werden.

Entsprechend Fig. 4 sind die Anschlußstutzen 20,21 des zweiten Gehäuseteils 4 vorzugsweise um etwa 45° abgewinkelt und so dimensioniert, daß der jeweilige Anschlußstutzen 20,21 in zwei, bezüglich der zugehörigen Schwenkachse 26 um 180° verschwenkte Stellungen stets so angeordnet ist, daß ein vom zweiten Gehäuseteil 4 abgewandter Abschnitt der Außenkontur des jeweiligen Anschlußstutzens 20,21 in einer Ebene 27 liegt bzw. sich in einer Ebene 27 erstreckt, in der eine der Außenflächen 22 liegt, die zu derjenigen Außenfläche 22 benachbart ist, an welcher der jeweilige Anschlußstutzen 20,21 angeordnet ist. In Fig. 4 sind für den Vorlauf-Anschlußstutzen 21 diese beiden Positionen wiedergegeben, wobei die eine mit durchgezogenen Linien und die andere mit unterbrochenen Linien dargestellt ist.

Durch diese Bauweise ergibt sich für das zweite Gehäuseteil 4 ein reduzierter Raumbedarf.

### Bezugszeichenliste

- 1: Vorrichtung
- 2: Gehäuse
- 3: erstes Gehäuseteil
- 4: zweites Gehäuseteil
- 5: Anschlußmittel
- 6: Verschraubung
- 7: Drehachse
- 8: Bereich
- 9: Brenner
- 10: Wärmeübertrager
- 11: Gebläse
- 12: Frischgas-Anschlußstutzen
- 13: Abgas-Anschlußstutzen
- 14: Abgastrakt
- 15: Brennstoffdosiereinrichtung
- 16: Brennstoff-Anschlußstutzen
- 17: Steuergerät
- 18: Schnittstelle
- 19: Pumpe
- 20: Rücklauf-Anschlußstutzen
- 21: Vorlauf-Anschlußstutzen
- 22: Außenflächen
- 23: Rille
- 24: Deckel
- 25: Halteeinrichtung
- 26: Schwenkachse
- 27: Ebene

## Patentansprüche

1. Motorunabhängig betreibbares Heizgerät eines Kraftfahrzeuges, insbesondere in Form eines Zuheizers oder einer Standheizung, mit einem Gehäuse (2), in dem ein Brenner (9) und ein den Brenner (9) koaxial umhüllender Wärmeübertrager (10) untergebracht sind,
wobei
das Gehäuse (2) aus einem ersten Gehäuseteil (3) und aus einem zweiten Gehäuseteil (4) zusammengebaut ist, wobei Anschlußmittel (5), mit denen die Gehäuseteile (3,4) aneinander befestigt sind, so gestaltet sind, daß die beiden Gehäuseteile (3,4) zumindest in zwei verschiedenen, zueinander um eine Drehachse (7) verdrehte Relativpositionen aneinander befestigbar sind, wobei der Brenner (9) am ersten Gehäuseteil (3) befestigt und koaxial zur Drehachse (7) angeordnet ist und wobei der Wärmeübertrager (10) am zweiten Gehäuseteil (4) befestigt und koaxial zur Drehachse (7) angeordnet ist.

2. Heizgerät nach Anspruch 1,
**dadurch gekennzeichnet,**
**daß** das erste Gehäuseteil (3) Anschlußstutzen (12,13,16) für Brennstoff und/oder Frischgas und/oder Abgas aufweist.

3. Heizgerät nach Anspruch 1 oder 2,
**dadurch gekennzeichnet,**
**daß** im ersten Gehäuseteil (3) ein Steuergerät (17) und/oder eine Brennstoffdosiereinrichtung (15) und/oder ein zur Zuführung von Frischgas und/oder zur Abführung von Abgas dienendes Gebläse (11) untergebracht ist.

4. Heizgerät nach einem der Ansprüche 1 bis 3,
**dadurch gekennzeichnet,**
**daß** das zweite Gehäuseteil (4) Anschlußstutzen (20,21) für einen Vorlauf und einen Rücklauf eines Wärmeübertragungsmediums aufweist, mit dem der Wärmeübertrager (10) beaufschlagt ist.

5. Heizgerät nach einem der Ansprüche 1 bis 4,
**dadurch gekennzeichnet,**
**daß** am oder im zweiten Gehäuseteil (4) eine Pumpeinrichtung (19) für das Wärmeübertragungsmedium angeordnet ist.

6. Heizgerät nach einem der Ansprüche 1 bis 5,
**dadurch gekennzeichnet,**
**daß** die Gehäuseteile (3,4) zumindest im Bereich (8) der aneinander anschließenden Seiten jeweils einen regelmäßigen, achteckigen Außenquerschnitt aufweisen.

7. Heizgerät zumindest nach Anspruch 2 oder 4,
**dadurch gekennzeichnet,**
**daß** zumindest einer der Anschlußstutzen (20,21) an einem ebenen Abschnitt (22) der Außenkontur des jeweiligen Gehäuseteils (4) angeordnet ist.

8. Heizgerät nach den Ansprüche 6 und 7,
**dadurch gekennzeichnet,**
**daß** der ebene Abschnitt durch eine der acht Außenflächen (22) des jeweiligen Gehäuseteils (4) gebildet ist.

9. Heizgerät zumindest nach Anspruch 2 oder 4,
**dadurch gekennzeichnet,**
**daß** zumindest einer der Anschlußstutzen (20,21) um eine senkrecht auf der Drehachse (7) stehende Schwenkachse (26) verstellbar ist.

10. Heizgerät nach den Ansprüchen 8 und 9,
**dadurch gekennzeichnet,**
**daß** der verstellbare Anschlußstutzen (20,21) in wenigstens zwei Positionen verstellbar ist, die relativ zueinander um 180° verschwenkt sind, wobei der den Anschlußstutzen (20,21) aufweisenden Außenfläche (22) in Umfangsrichtung des jeweiligen Gehäuseteils (4) an jeder Seite eine weitere Außenfläche (22) benachbart ist, die in einer Ebene (27) liegt, wobei der Anschlußstutzen (20,21) in jeder dieser Positionen in einer dieser Ebenen (27) oder auf einer dem jeweiligen Gehäuseteil (4) zugewandten Seite dieser Ebene (27) angeordnet ist.

11. Heizgerät nach Anspruch 9 oder 10,
**dadurch gekennzeichnet,**
**daß** der verstellbare Anschlußstutzen (20,21) am jeweiligen Gehäuseteil (4) drehbar gelagert oder umsteckbar angebracht ist.

12. Heizgerät nach einem der Ansprüche 1 bis 11,
**dadurch gekennzeichnet,**
**daß** die bei zusammengebautem Gehäuse (2) aneinander anschließenden Seiten der Gehäuseteile (3,4) in den mindestens zwei Relativpositionen so aneinander anliegen, daß das zusammengebaute Gehäuse (2) eine geschlossene Außenkontur aufweist.

13. Heizgerät nach einem der Ansprüche 1 bis 12,
**dadurch gekennzeichnet,**
**daß** an der Außenseite wenigstens eines der Gehäuseteile (3,4) parallel zur Drehachse (7) verlaufende Rillen (23) mit oder ohne Hinterschneidung ausgebildet sind, an denen Befestigungsmittel zum Befestigen des Heizgerätes (1) am Fahrzeug angreifen können.

## Claims

1. Engine-independently operable heating device of a motor vehicle, in particular in the form of an additional heater or an auxiliary heating system, with a housing (2) in which a burner (9) and a heat exchanger (10) surrounding the burner (9) coaxially are accommodated, the housing (2) being assembled from a first housing part (3) and from a second housing part (4), connection means (5), with which the housing parts (3, 4) are fastened to one another, being designed in such a way that the two housing parts (3, 4) can be fastened to one another in at least two different relative positions rotated about an axis of rotation (7) in relation to one another, the burner (9) being fastened to the first housing part (3) and arranged coaxially with the axis of rotation (7), and the heat exchanger (10) being fastened to the second housing part (4) and arranged coaxially with the axis of rotation (7).

2. Heating device according to Claim 1, **characterized in that** the first housing part (3) comprises connection necks (12, 13, 16) for fuel and/or fresh gas and/or exhaust gas.

3. Heating device according to Claim 1 or 2, **characterized in that** a control device (17) and/or a fuel-proportioning apparatus (15) and/or a blower (11) serving for supplying fresh gas and/or for removing exhaust gas is/are accommodated in the first housing part (3).

4. Heating device according to one of Claims 1 to 3, **characterized in that** the second housing part (4) comprises connection necks (20, 21) for a forward run and a return run of a heat transfer medium with which the heat exchanger (10) is acted on.

5. Heating device according to one of Claims 1 to 4, **characterized in that** a pumping apparatus (19) for the heat transfer medium is arranged on or in the second housing part (4).

6. Heating device according to one of Claims 1 to 5, **characterized in that** the housing parts (3, 4) in each case have a regular octagonal external cross section at least in the region (8) of the sides adjoining one another.

7. Heating device at least according to Claim 2 or 4, **characterized in that** at least one of the connection necks (20, 21) is arranged on a plane portion (22) of the external contour of the housing part (4) concerned.

8. Heating device according to Claims 6 and 7, **characterized in that** the plane portion is formed by one of the eight external surfaces (22) of the housing part (4) concerned.

9. Heating device at least according to Claim 2 or 4, **characterized in that** at least one of the connection necks (20, 21) is adjustable about a pivoting axis (26) perpendicular to the axis of rotation (7).

10. Heating device according to Claims 8 and 9, **characterized in that** the adjustable connection neck (20, 21) is adjustable into at least two positions which are pivoted by 180° relative to one another, a further external surface (22) which lies in a plane (27) being adjacent on each side in the peripheral direction of the housing part (4) concerned to the external surface (22) comprising the connection neck (20, 21), the connection neck (20, 21) being in each of these positions arranged in one of these planes (27) or on a side of this plane (27) which faces the housing part (4) concerned.

11. Heating device according to Claim 9 or 10, **characterized in that** the adjustable connection neck (20, 21) is provided in a rotatably mounted manner or rearrangeably on the housing part (4) concerned.

12. Heating device according to one of Claims 1 to 11, **characterized in that** those sides of the housing parts (3, 4) adjoining one another when the housing (2) has been assembled bear against one another in such a way in the at least two relative positions that the assembled housing (2) has a closed external contour.

13. Heating device according to one of Claims 1 to 12, **characterized in that** grooves (23) with or without undercut extending parallel to the axis of rotation (7) are designed on the outer side of at least one of the housing parts (3, 4), in which grooves fastening means for fastening the heating device (1) to the vehicle can engage.

## Revendications

1. Appareil de chauffage fonctionnant indépendamment du moteur d'un véhicule automobile, notamment sous la forme d'une source de chaleur ou d'un chauffage auxiliaire, comprenant un boîtier (2), dans lequel sont montés un brûleur (9) et un échangeur de chaleur (10) enveloppant coaxialement le brûleur (9),
le boîtier (2) étant constitué d'une première partie de boîtier (3) et d'une deuxième partie de boîtier (4), des moyens de raccordement (5) avec lesquels les parties de boîtier (3, 4) sont fixées l'une à l'autre, étant configurés de telle sorte que les deux parties de boîtier (3, 4) puissent être fixées l'une à l'autre au moins dans deux positions différentes relatives tournées l'une par rapport à l'autre autour d'un axe de rotation (7), le brûleur (9) étant fixé sur la première partie de boîtier (3) et étant disposé coaxialement à l'axe de rotation (7) et l'échangeur de chaleur (10) étant fixé sur la deuxième partie de boîtier (4) et étant disposé coaxialement à l'axe de rotation (7).

2. Appareil de chauffage selon la revendication 1,
**caractérisé en ce que**
la première partie de boîtier (3) présente des ajutages (12, 13, 16) pour le combustible et/ou le gaz frais et/ou le gaz d'échappement.

3. Appareil de chauffage selon la revendication 1 ou 2,
**caractérisé en ce que**
dans la première partie de boîtier (3) sont montés un appareil de commande (17) et/ou un dispositif de dosage de combustible (15) et/ou une soufflante (11) servant à l'alimentation en gaz frais et/ou à l'évacuation de gaz d'échappement.

4. Appareil de chauffage selon l'une quelconque des revendications 1 à 3,
**caractérisé en ce que**
la deuxième partie de boîtier (4) présente des ajutages (20, 21) pour l'apport et le retour d'un fluide de transfert thermique avec lequel l'échangeur de chaleur (10) est sollicité.

5. Appareil de chauffage selon l'une quelconque des revendications 1 à 4,
**caractérisé en ce qu'**
un dispositif de pompe (19) pour le fluide de transfert thermique est disposé sur ou dans la deuxième partie de boîtier (4).

6. Appareil de chauffage selon l'une quelconque des revendications 1 à 5,
**caractérisé en ce que**
les parties de boîtier (3, 4) présentent au moins dans la région (8) des côtés se raccordant l'un à l'autre à chaque fois une section transversale extérieure régulière octogonale.

7. Appareil de chauffage selon au moins la revendication 2 ou 4,
**caractérisé en ce qu'**
au moins l'un des ajutages (20, 21) est disposé sur une portion plane (22) du contour extérieur de la partie de boîtier (4) respective.

8. Appareil de chauffage selon les revendications 6 et 7,
**caractérisé en ce que**
la portion plane est formée par l'une des huit faces extérieures (22) de la partie de boîtier respective (4).

9. Appareil de chauffage selon au moins la revendication 2 ou 4,
**caractérisé en ce qu'**
au moins l'un des ajutages (20, 21) peut être déplacé autour d'un axe de pivotement (26) perpendiculaire à l'axe de rotation (7).

10. Appareil de chauffage selon les revendications 8 et 9,
**caractérisé en ce que**
l'ajutage déplaçable (20, 21) peut être déplacé dans au moins deux positions, qui sont pivotées de 180° l'une par rapport à l'autre, la face extérieure (22) présentant l'ajutage (20, 21) dans la direction périphérique de la partie de boîtier respective (4) étant adjacente de chaque côté à une autre face extérieure (22) qui se trouve dans un plan (27), l'ajutage (20, 21) étant disposé dans chacune de ces positions dans l'un de ces plans (27) ou sur un côté de ce plan (27) tourné vers la partie de boîtier respective (4).

11. Appareil de chauffage selon la revendication 9 ou 10,
**caractérisé en ce que**
l'ajutage réglable (20, 21) est monté de manière rotative ou est installé de manière changeable sur la partie de boîtier respective (4).

12. Appareil de chauffage selon l'une quelconque des revendications 1 à 11,
**caractérisé en ce que**
les côtés des parties de boîtier (3, 4) se raccordant l'un à l'autre lorsque le boîtier (2) est assemblé s'appliquent l'un contre l'autre dans les au moins deux positions relatives, de telle sorte que le boîtier assemblé (2) présente un contour extérieur fermé.

13. Appareil de chauffage selon l'une quelconque des revendications 1 à 12,
**caractérisé en ce que**
sur le côté extérieur d'au moins l'une des parties de boîtier (3, 4) sont réalisées des gorges (23) s'étendant parallèlement à l'axe de rotation (7), avec ou sans contre-dépouille, sur lesquelles peuvent venir s'engager des moyens de fixation pour la fixation de l'appareil de chauffage (1) sur le véhicule.
